# EUROPÄISCHE PATENTSCHRIFT

(11) **EP 2 804 716 B1**
(45) Veröffentlichungstag und Bekanntmachung des Hinweises auf die Patenterteilung: **18.04.2018**
(21) Anmeldenummer: 13704014.3
(22) Anmeldetag: 18.01.2013
(51) Int. Cl.: B23K 26/06, H01S 3/067, H01S 3/13

(54) **VERFAHREN UND VORRICHTUNG ZUR MATERIALBEARBEITUNG MIT EINEM VON EINEM FASERLASER ERZEUGTEN GEPULSTEN LASERSTRAHL**
METHOD AND DEVICE FOR PROCESSING MATERIALS USING A PULSED LASER BEAM GENERATED BY A FIBER LASER
PROCÉDÉ ET DISPOSITIF POUR TRAITER UN MATÉRIAU À L'AIDE D'UN RAYON LASER PULSÉ GÉNÉRÉ PAR UN LASER À FIBRE

(30) Priorität: 20.01.2012 DE 102012200849; 18.05.2012 DE 102012208330
(43) Veröffentlichungstag der Anmeldung: 26.11.2014
(73) Patentinhaber: ROFIN-BAASEL Lasertech GmbH & Co. KG, 82319 Starnberg (DE)
(72) Erfinder: RÖHNER, Markus, 82319 Starnberg (DE); BÖCK, Erich, 82319 Starnberg (DE); ERBEN, Benjamin, 52062 Aachen (DE); SCHMUCKER, Erich, 82340 Feldafing (DE); STÄBLEIN, Jürgen, 85716 Tutzing (DE)
(74) Vertreter: Meissner Bolte Partnerschaft mbB
(86) Internationale Anmeldenummer: PCT/EP2013/050905
(87) Internationale Veröffentlichungsnummer: WO 2013/107846

(56) Entgegenhaltungen:
- EP-A2- 2 136 439
- DE-A1-102005 034 106
- DE-A1-102005 060 487
- US-A- 5 151 909
- US-A1- 2010 316 072
- US-B1- 7 872 794

## Beschreibung

Die Erfindung bezieht sich auf ein Verfahren zur Materialbearbeitung mit einem von einem Faserlaser erzeugten gepulsten Laserstrahl. Die Erfindung bezieht sich außerdem auf eine zur Durchführung des Verfahrens geeignete Vorrichtung.

Bei der Materialbearbeitung mit einem Laserstrahl werden aufgrund ihres kompakten Aufbaus, ihres hohen Wirkungsgrades und der hohen Strahlqualität des von ihnen erzeugten Laserstrahls immer häufiger Faserlaser eingesetzt. Insbesondere bei Anwendungen, bei denen das Material mit einem gepulsten Laserstrahl aufgeschmolzen wird, haben sich jedoch eine Reihe von fertigungstechnischen Problemen ergeben. So haben sich beim Aufschmelzen und Anschmelzen von anorganischen, beispielsweise metallischen oder keramischen Pulvern, oder organischen Pulvern vermehrt Mängel in Form einer Ausbildung von Lunkern oder Stellen mit geringerer Dichte gezeigt. Auch bei Schweißapplikationen wurden ungleichmäßige Schweißraupen oder bei Punktschweißungen qualitativ minderwertige Schweißungen beobachtet.

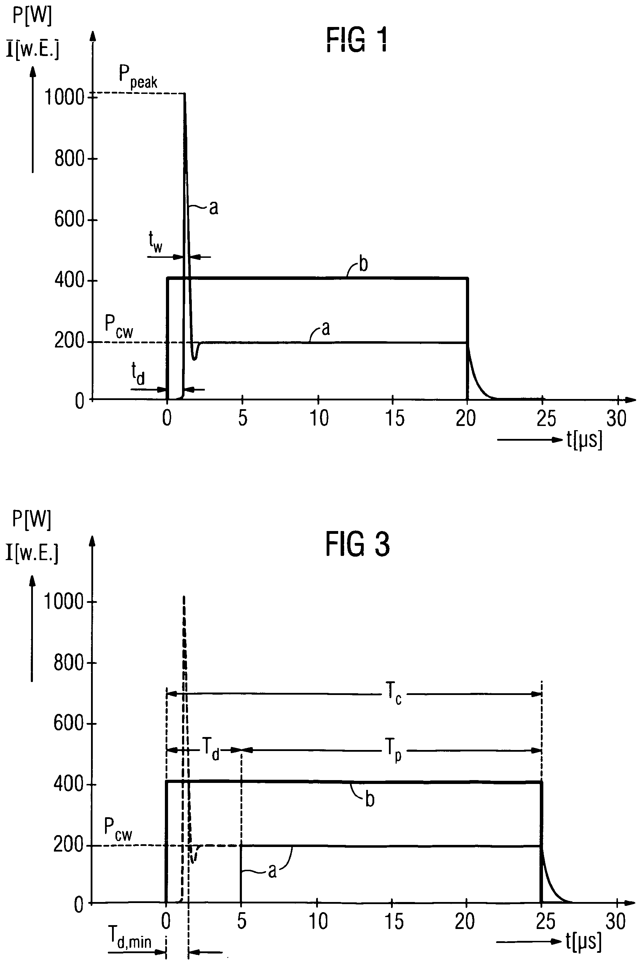

Die beobachteten negativen Effekte sind im Wesentlichen verursacht durch einen beim Starten der Laseremission insbesondere bei cw-Faserlasern oder schnellmodulierten gain-switch Faserlasern ausgeprägt auftretenden primären Relaxationspuls oder - peak, dessen Leistung ein Vielfaches der nominellen cw-Leistung betragen kann. Im Diagramm der Fig. 1 zeigt Kurve a den typischen zeitlichen Verlauf der Ausgangsleistung P des von einem Faserlaser erzeugten Laserstrahls, wenn dessen als Pumplichtquelle verwendeter Diodenlaser mit einem in Kurve b dargestellten Strompuls I angesteuert wird. In diesem Diagramm ist zu erkennen, dass der Start der Laseremission gegenüber dem Start des Strompulses I um eine Zeit t_{d} verzögert ist. Die Ausgangsleistung P steigt dann schnell bis zu einem Maximalwert Pₚₑₐₖ an, um dann nach diesem kurzen Anstieg auf die cw-Leistung P_{cw} einzuschwingen, die im Beispiel nur 20% der maximalen Leistung Pₚₑₐₖ im Relaxationspuls beträgt. Verzögerungszeit t_{d} Maximalwert Pₚₑₐₖ und Breite t_{w} des Relaxationspulses hängen dabei unter anderem von der Pulsfrequenz, der Pulsbreite und der angestrebten cw-Leistung P_{cw} ab.

In der EP 2 136 439 A2 wird deshalb vorgeschlagen, den Relaxationspuls durch Steuerung des dem als Pumplichtquelle verwendeten Diodenlaser zugeführten Strompulses zu unterdrücken, indem dieser in einem ersten Zeitabschnitt auf einen niedrigen Anfangswert gesteuert wird, bei dem die Laserausgangsleistung allenfalls einen Wert erreicht, der so niedrig ist, dass das das Auftreten eines Relaxationspulses verhindert wird. In einem zweiten Zeitabschnitt wird dann der Strompuls auf einen Endwert gesteuert. Abhängig vom angestrebten Endwert der Laserausgangsleistung kann durch geeignete Wahl der Laserausgangsleistung im ersten Zeitabschnitt und dessen Dauer das Auftreten eines Relaxationspulses vermieden werden.

Der Erfindung liegt nun die Aufgabe zugrunde, ein Verfahren zur Materialbearbeitung mit einem von einem Faserlaser erzeugten gepulsten Laserstrahl anzugeben, mit dem die vorstehend genannten ungünstigen Effekte weitgehend vermieden sind. Außerdem liegt der Erfindung die Aufgabe zugrunde, eine Vorrichtung zur Durchführung des Verfahrens anzugeben.

Hinsichtlich des Verfahrens wird die genannte Aufgabe gemäß der Erfindung gelöst mit einem Verfahren mit den Merkmalen des Patentanspruches 1, gemäß denen ein im Strahlengang des Laserstrahls angeordnetes optischen Schaltelement frühestens dann geschlossen wird, wenn die Ausgangsleistung des Laserstrahls einen vorgegebenen Wert unterschreitet.

Durch geeignete Wahl des vorgegebenen Wertes beginnt die Materialbearbeitung frühestens dann, wenn bei Auftreten eines Relaxationspeaks dessen Leistung auf einen Wert abgefallen ist, bei dem die vorstehend genannten Nachteile nicht mehr auftreten. Dementsprechend sind die Bearbeitungsergebnisse bei der Materialbearbeitung, bei der ein Auf- oder Anschmelzen des Materials wesentlicher Bestandteil des Bearbeitungsprozesses ist, deutlich verbessert.

Unter Schließen eines optischen Schaltelementes wird im Folgenden ein Vorgang verstanden, bei dem das Schaltelement in einen Zustand versetzt wird, in dem der Laserstrahl transmittiert wird.

Wenn der vorgegebene Wert das Zweifache der sich innerhalb der Pulsdauer bei Erreichen eines cw-Betriebes ergebenden cw-Ausgangsleistung beträgt, können die vorstehend genannten Nachteile zuverlässig vermieden werden.

Da die erzielten Bearbeitungsergebnisse umso besser sind, je kleiner der Unterschied zwischen der am Anfang des Pulses auftretenden maximalen Leistung und der sich anschließend einstellenden cw-Leistung ist, ist in bevorzugten Ausgestaltungen der Erfindung vorgesehen, dass die Ausgangsleistung des Laserstrahls beim Schließen des optischen Schaltelementes die cw-Ausgangsleistung höchstens um 50%, vorzugsweise höchstens um 10% überschreitet.

Wenn eine mit der Leistung des Laserstrahls korrelierte Messgröße erfasst und zum Steuern des Schaltelementes herangezogen wird, können aufwendige, das Einschaltverhalten des Faserlasers und das Schaltverhaltenden des optischen Schaltelementes charakterisierende Kalibriermessungen und gegebenenfalls in regelmäßigen Zeitabständen durchzuführende Kontrollmessungen zum Festlegen des Schaltzeitpunktes entfallen.

Hinsichtlich der Vorrichtung wird die Aufgabe gemäß der Erfindung gelöst mit den Merkmalen des Patentanspruches 6, die sinngemäß den in Patentanspruch 1 wiedergegebenen Merkmalen entsprechen.

Zur weiteren Erläuterung der Erfindung wird auf die in den Figuren dargestellten Ausführungsbeispiele verwiesen. Es zeigen:
Fig. 1 ein Diagramm, in dem der Strompuls I in willkürlichen Einheiten (w.E.) für die Ansteuerung eines zum optischen Pumpen verwendeten Diodenlasers sowie die Ausgangsleistung P eines auf diese Weise gemäß dem Stand der Technik optisch gepumpten Faserlasers gegen die Zeit t aufgetragen sind,
Fig. 2 eine zur Durchführung des Verfahrens gemäß der Erfindung geeignete Laseranlage in einer schematischen Prinzipdarstellung,
Fig. 3 ein Diagramm, bei dem ebenfalls die Ausgangsleistung P des Faserlasers und der Strompuls I gegen die Zeit t aufgetragen sind, und bei dem der primäre Relaxationspeak mit Hilfe des optischen Schaltelementes geblockt wird,
Fig. 4 eine vorteilhafte Ausgestaltung einer zur Durchführung des Verfahrens gemäß der Erfindung geeigneten Laseranlage mit einem im Strahlengang des Laserstrahls angeordneten Strahlungsdetektor zum Erfassen einer mit der Ausgangsleistung korrelierten Messgröße.

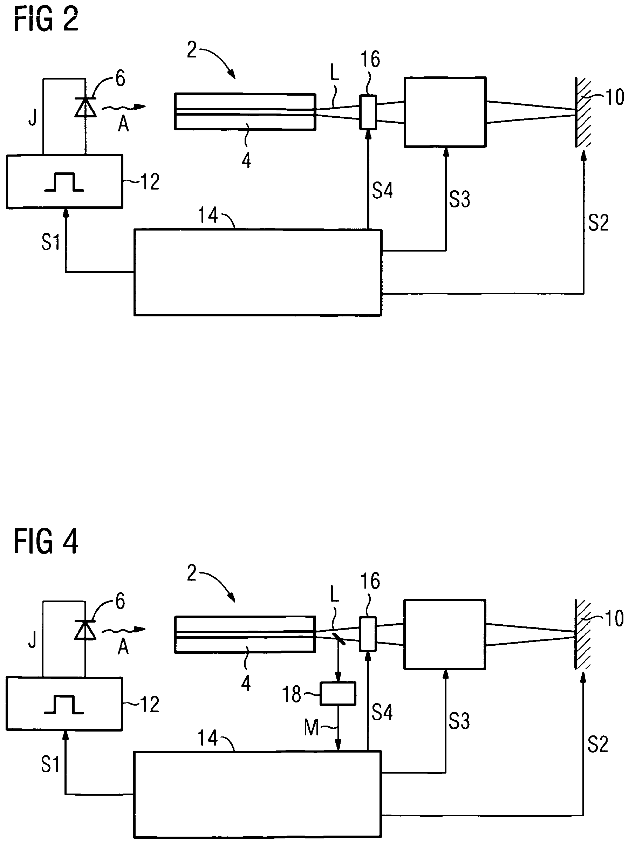

Gemäß Fig. 2 enthält eine Laseranlage einen Faserlaser 2, dessen Laserfaser 4 von einem Diodenlaser 6 optisch gepumpt wird. Das von dem Diodenlaser 6, in der Regel eine Anordnung aus mehreren Einzelemittern, emittierte Pumplicht A (Pumplaserpuls) wird in entlang der Laserfaser 4 angeordnete Pumpfasern oder in einen Mantel der Laserfaser 4 eingekoppelt und gelangt von dort aus in den laseraktiven Faserkern. Der von der Laserfaser 4 erzeugte Laserstrahl L wird mit einer symbolisch veranschaulichten Abbildungs- und Strahlführungseinrichtung 8 auf ein zu bearbeitendes Material 10 fokussiert. Der Diodenlaser 6 wird von einer steuerbaren Stromquelle 12 mit einem Strompuls I versorgt. Die Stromquelle 12 wird mit Steuersignalen S1 von einer zentralen Steuereinheit 14 gesteuert, wobei neben Höhe und Dauer des Strompulses I auch dessen Pulsform variabel gesteuert werden kann. Diese Steuereinheit 14 steuert über weitere Steuersignale S2, S3 die Relativbewegung zwischen Material 10 und Laserstrahl L, sowie weitere Prozessparameter für den Bearbeitungsvorgang.

Der Laserfaser 4 ist extern ein von der Steuereinheit gesteuertes optisches Schaltelement 16, beispielsweise ein optischer Schalter, ein schaltbarer Absorber oder ein schaltbarer Reflektor nachgeschaltet, das nach einer Verzögerungszeit T_{d} erst dann geschlossen wird und den Laserstrahl L in Richtung auf das Material 10 transmittiert, wenn der primäre Relaxationspuls abgeklungen ist und die Ausgangsleistung des Laserstrahls einen vorgegebenen Wert unterschritten hat. Dieser Wert hängt von der Art der Materialbearbeitung, dem Werkstoff und der zur Bearbeitung angestrebten Leistung ab und muss je nach Anwendungsfall experimentell ermittelt werden. Dementsprechend kann der Diodenlaser 6 mit einem rechteckförmigen Strompuls I angesteuert werden, bei dem das Auftreten eines Relaxationspulses unvermeidlich ist, da dieser zumindest teilweise optisch abgeblockt, d.h. nicht zum Material geleitet wird.

Dies ist im Diagramm der Fig. 3 dargestellt, bei dem die Verzögerungszeit T_{d} so groß ist, dass die Laserfaser beim Schließen des optischen Schaltelementes bereits in einen cw-Betrieb mit zumindest annähernd konstanter Ausgangsleistung P übergegangen ist und dementsprechend der in Kurve a dargestellte, zur Materialbearbeitung genutzte Laserpuls keine Überhöhung aufweist. Die Pulsdauer T_{c} des in Kurve b dargestellten rechteckförmigen Strompulses I ist dabei um die Verzögerungszeit T_{d} länger, um eine für den Bearbeitungsprozess angestrebte bzw. benötigte Pulsdauer Tₚ des Laserpulses zu erzielen.

Die Ansteuerungsparameter des Faserlasers, in der Anmeldung beispielhaft mit dem zur Ansteuerung des Diodenlasers verwendeten Strompuls veranschaulicht, oder das Schaltverhalten des optischen Schaltelementes 16 hängen dabei vom Einschaltverhalten des jeweils verwendeten Faserlasers ab und müssen vorab für zumindest für jeden Faserlasertyp durch Messung ermittelt und in der Steuereinrichtung 14 hinterlegt werden.

Eine derartige vorherige Kalibrierung bzw. regelmäßige Kontrollmessung und erneute Festlegung der Ansteuerparameter der Stromquelle oder des Schaltzeitpunktes des optischen Schaltelementes kann entfallen, wenn in der Ausführungsform der Laseranlage gemäß Fig. 4 eine mit der Ausgangsleistung des Faserlasers korrelierte Messgröße erfasst wird. Hierzu wird beispielsweise ein kleiner Teil des Laserstrahls durch Reflexion ausgekoppelt und die Leistung des ausgekoppelten Laserstrahls in einem Strahlungsdetektor 18 erfasst. Das vom Strahlungsdetektor 18 erzeugte Messsignal M wird an die zentrale Steuereinheit 14 weitergeleitet. Aus dem Messsignal M wird ein Steuersignal S1 zur Steuerung des optischen Schaltelementes 16 abgeleitet, wobei das optische Schaltelement 16 geschlossen wird, wenn beispielsweise in der Steuereinheit 14 ein Abklingen der Leistung des Relaxationspulses auf einen vorgegebenen Wert, beispielsweise ein auf dessen Maximum bezogener Prozentwert, festgestellt wird. Besonders gut reproduzierbare Bearbeitungergebnisse können erreicht werden, wenn der vorgegebene Wert wenigstens das Zweifache, vorzugsweise wenigstens das 1,5-fache, insbesondere wenigstens das 1,1-fache der angestrebten cw-Leistung beträgt, oder wenn das Erreichen eines cw-Plateaus festgestellt wird.

Eine solche, gemäß der Erfindung bevorzugte minimale Verzögerungszeit T_{d,min} ist im Diagramm der Fig. 3 dargestellt, bei der das optische Schaltelement 16 bereits dann geschlossen wird, wenn die Ausgangsleistung P des Relaxationspulses auf etwa das Zweifache der im dargestellten Beispiel etwa 200W betragenden cw-Leistung abgeklungen ist, und in diesem Beispiel einen Wert von etwa 400w erreicht hat. In der Praxis hat sich nämlich herausgestellt, dass es auch ausreichen kann, wenn die durch einen Relaxationspeak auftretende Anfangsüberhöhung, d.h. die bei frühem Triggern (Schließen) des Schaltelementes im Triggerzeitpunkt noch in der abklingenden Flanke vorliegende Ausgangsleistung P das Zweifache der cw-Ausgangsleistung P_{cw} nicht überschreitet.

In den beispielhaft dargestellten Diagrammen sind rechteckförmige Laserpulse dargestellt, bei denen die Ausgangsleistung im cw-Betrieb konstant ist. Grundsätzlich sind aber auch Pulsformen möglich, bei denen die Ausgangsleistung im cw-Betrieb nicht konstant sondern beispielsweise moduliert ist.

In den dargestellten Ausführungsbeispielen ist das optische Schaltelement 16 außerhalb des Laserfaser 4 angeordnet. Grundsätzlich ist es aber auch möglich, das Schaltelement 16 in die Laserfaser 4 zu integrieren.

## Patentansprüche

1. Verfahren zur Materialbearbeitung mit einem von einer Laserfaser (4) erzeugten gepulsten Laserstrahl (L) **gekennzeichnet durch** ein der Laserfaser (4) extern nachgeschaltetes optisches Schaltelement (16), bei dem das im Strahlengang des Laserstrahls (L) angeordnete optische Schaltelement (16) frühestens dann geschlossen und in einen Zustand versetzt wird, in dem der Laserstrahl transmittiert wird, wenn die Ausgangsleistung (P) des Laserstrahls (L) einen vorgegebenen Wert unterschreitet.

2. Verfahren nach Anspruch 1, bei dem das optische Schaltelement (16) frühestens dann geschlossen wird, wenn die Ausgangsleistung (P) des Laserstrahls (L) das Zweifache der sich innerhalb der Pulsdauer bei Erreichen eines cw-Betriebes ergebenden cw-Ausgangsleistung (P_{cw}) unterschreitet.

3. Verfahren nach Anspruch 2, bei dem die Ausgangsleistung des Laserstrahls (L) beim Schließen des optischen Schaltelementes (16) die cw-Ausgangsleistung (P_{cw}) höchstens um 50% überschreitet.

4. Verfahren nach Anspruch 2, bei dem die Ausgangsleistung des Laserstrahls (L) beim Schließen des optischen Schaltelementes (16) die cw-Ausgangsleistung (P_{cw}) beim Schließen des optischen Schaltelementes (16) höchstens um 10% überschreitet.

5. Verfahren nach einem der Ansprüche 1 bis 4, bei dem eine mit der Ausgangsleistung (P) des Laserstrahls (L) korrelierte Messgröße (M) erfasst und zum Steuern des Schaltelementes (16) herangezogen wird.

6. Vorrichtung zur Materialbearbeitung mit einem von einem Faserlaser (2) erzeugten gepulsten Laserstrahl (L), mit einem Diodenlaser (6) zum Pumpen der Laserfaser (4) des Faserlasers (2), einer steuerbaren Stromquelle (12) zum Versorgen des Diodenlasers (6) mit einem Strompuls (I) **gekennzeichnet durch** ein im Strahlengang des Laserstrahls (L) angeordnetes optisches Schaltelement (16), welches der Laserfaser (4) extern nachgeschaltet ist, sowie mit einer Steuereinheit (14) zum Durchführen eines Verfahrens gemäß einem der Ansprüche 1 bis 4.

7. Vorrichtung nach Anspruch 6, mit einem Strahlungsdetektor (18) zum Messen einer mit der Ausgangsleistung (P) des Laserstrahls (L) korrelierten Messgröße (M), bei der die Steuereinheit (14) zur Durchführung des Verfahrens gemäß Anspruch 5 eingerichtet ist.

8. Vorrichtung nach Anspruch 6 oder 7, bei dem das optische Schaltelement (16) in die Laserfaser (4) integriert ist.

## Claims

1. Method for material processing by means of a pulsed laser beam (L) generated by a laser fibre (4), **characterised by** an optical switching element (16) externally downstream of the laser fibre (4), in which the optical switching element (16) arranged in the beam path of the laser beam (L) is closed and transferred into a state in which the laser beam is transmitted at the earliest when the output power (P) of the laser beam (L) falls below a predetermined value.

2. Method according to claim 1, in which the optical switching element (16) is closed at the earliest when the output power (P) of the laser beam (L) falls below two times the cw output power (P_{cw}) that occurs within the pulse duration on reaching a cw-operation.

3. Method according to claim 2, in which the output power of the laser beam (L), when the optical switching element (16) is closed, exceeds the cw output power (P_{cw}) by at most 50%.

4. Method according to claim 2, in which the output power of the laser beam (L), when the optical switching element (16) is closed, exceeds the cw output power (P_{cw}) by at most 10% when the optical switching element (16) is closed.

5. Method according to one of claims 1 to 4, in which a measured variable (M) correlated to the output power (P) of the laser beam (L) is detected and used to control the switching element (16).

6. Device for material processing by means of a pulsed laser beam (L) generated by a fibre laser (2), having a diode laser (6) for pumping the laser fibre (4) of the fibre laser (2), a controllable current source (12) for supplying the diode laser (6) with a current pulse (I), **characterised by** an optical switching element (16) arranged in the beam path of the laser beam (L), said switching element (16) being externally downstream of the laser fibre (4), and having a control unit (14) for carrying out a method according to one of claims 1 to 4.

7. Device according to claim 6, having a radiation detector (18) for measuring a measured variable (M) correlated to the output power (P) of the laser beam (L), in which the control unit (14) is set up to carry out the method according to claim 5.

8. Device according to claim 6 or 7, in which the optical switching element (16) is integrated into the laser fibre (4).

## Revendications

1. Procédé de traitement de matériau par un faisceau (L) laser pulsé, produit par une fibre (4) laser, **caractérisé par** un élément (16) optique de commutation, monté en aval extérieurement de la fibre (4) laser, dans lequel on ferme, au plus tôt, l'élément (16) optique de commutation, monté dans le trajet du faisceau (L) laser, et on le met dans un état, dans lequel le faisceau laser est transmis, lorsque la puissance (P) de sortie du faisceau (L) laser devient inférieure à une valeur donnée à l'avance.

2. Procédé suivant la revendication 1, dans lequel on ferme, au plus tôt, l'élément (16) optique de commutation, lorsque la puissance (P) de sortie du faisceau (L) laser devient inférieure à deux fois la puissance (P_{cw}) de sortie cw obtenue dans la durée d'impulsion, lorsqu'un fonctionnement cw est atteint.

3. Procédé suivant la revendication 2, dans lequel la puissance de sortie du faisceau (L) laser dépasse, à la fermeture de l'élément (16) optique de commutation, au plus de 50% la puissance (P_{cw}) de sortie cw.

4. Procédé suivant la revendication 2, dans lequel la puissance de sortie du faisceau (L) laser dépasse, à la fermeture de l'élément (16) optique de commutation, au plus de 10% la puissance (P_{cw}) de sortie cw à la fermeture de l'élément (16) optique de commutation.

5. Procédé suivant l'une des revendications 1 à 4, dans lequel on détecte une grandeur (M) de mesure corrélée à la puissance (P) de sortie du faisceau (L) laser et on en tire parti pour commander l'élément (16) optique de commutation.

6. Dispositif de traitement de matériau par un faisceau (L) laser pulsé produit par un laser (2) à fibre, comprenant un laser (6) à diode, pour le pompage de la fibre (4) du laser (2) à fibre, une source (12) de courant réglable, pour alimenter le laser (6) à diode en une impulsion (I) de courant, **caractérisé par** un élément (16) optique de commutation, qui est monté dans le trajet du faisceau (L) laser et qui est en aval extérieurement de la fibre (4) laser,
ainsi que comprenant une unité (14) de commande, pour effectuer un procédé suivant l'une des revendications 1 à 4.

7. Dispositif suivant la revendication 6, comprenant un détecteur (18) de rayonnement, pour mesurer une grandeur (M) de mesure corrélée à la puissance (P) de sortie du faisceau (L) laser, dans lequel le dispositif (14) de commande est conçu pour effectuer le procédé suivant la revendication 5.

8. Dispositif suivant la revendication 6 ou 7, dans lequel l'élément (16) optique de commutation est intégré à la fibre (4) laser.
